Europäisches Patentamt

European Patent Office

Office européen des brevets

(19)

(11) Numéro de publication : **0 516 543 B1**

(12) **FASCICULE DE BREVET EUROPEEN**

(45) Date de publication du fascicule du brevet :
**20.12.95 Bulletin 95/51**

(51) Int. Cl.⁶ : **H04N 3/15**

(21) Numéro de dépôt : **92401459.0**

(22) Date de dépôt : **27.05.92**

(54) **Dispositif de prise de vues optoélectronique à défilement**

(30) Priorité : **30.05.91 FR 9106525**

(43) Date de publication de la demande :
**02.12.92 Bulletin 92/49**

(45) Mention de la délivrance du brevet :
**20.12.95 Bulletin 95/51**

(84) Etats contractants désignés :
**BE DE GB IT NL**

(56) Documents cités :
**EP-A- 0 030 292**
**EP-A- 0 257 379**
**EP-A- 0 369 585**

(56) Documents cités :
**PATENT ABSTRACTS OF JAPAN, vol. 7, no.
129 (E-179)[1274], 4 juin 1983; & JP-A-58 043
671**
**OPTICAL ENGINEERING, vol. 30, no. 4, avril
1991, pages 483-488, Bellingham US; GIORA
EYTAN: "Airborne camera based on one
dimensional linear array"**

(73) Titulaire : **MATRA MARCONI SPACE FRANCE
4, rue de Presbourg
F-75116 Paris (FR)**

(72) Inventeur : **Davancens, Robert
L'Estanque, Odars
F-31450 Montgiscard (FR)**

(74) Mandataire : **Fort, Jacques
CABINET PLASSERAUD
84, rue d'Amsterdam
F-75009 Paris (FR)**

## Description

L'invention concerne les dispositifs de prise de vues à défilement et à haute résolution spatiale. Elle trouve une application particulièrement importante, bien que non exclusive, dans le domaine de l'observation des ressources terrestres à partir d'un satellite placé sur une orbite basse à défilement, à l'aide d'un dispositif à fonctionnement dit en râteau ou "push-broom".

On connaît déjà des dispositifs de prise de vues à défilement du type comprenant une optique formant simultanément l'image des points de toute une ligne orthogonale à la direction du défilement, une barrette de capteurs placée dans le plan focal de l'optique et des moyens pour transférer les données de tous les capteurs de la barrette simultanément, à une fréquence déterminée par le pas d'échantillonnage choisi dans le sens du défilement et la vitesse du défilement, en vue de leur lecture.

On utilise notamment des dispositifs de prise de vues du genre ci-dessus dont la barrette est constituée de capteurs dits à couplage de charge ou CCD. Pour augmenter le rapport signal à bruit, la barrette est souvent constituée non pas d'une seule rangée ou ligne de capteurs, mais d'une matrice où les capteurs sont disposés en rangées ou lignes et en colonnes dont le nombre correspond respectivement au niveau de sommation souhaité et au nombre d'éléments de la scène.

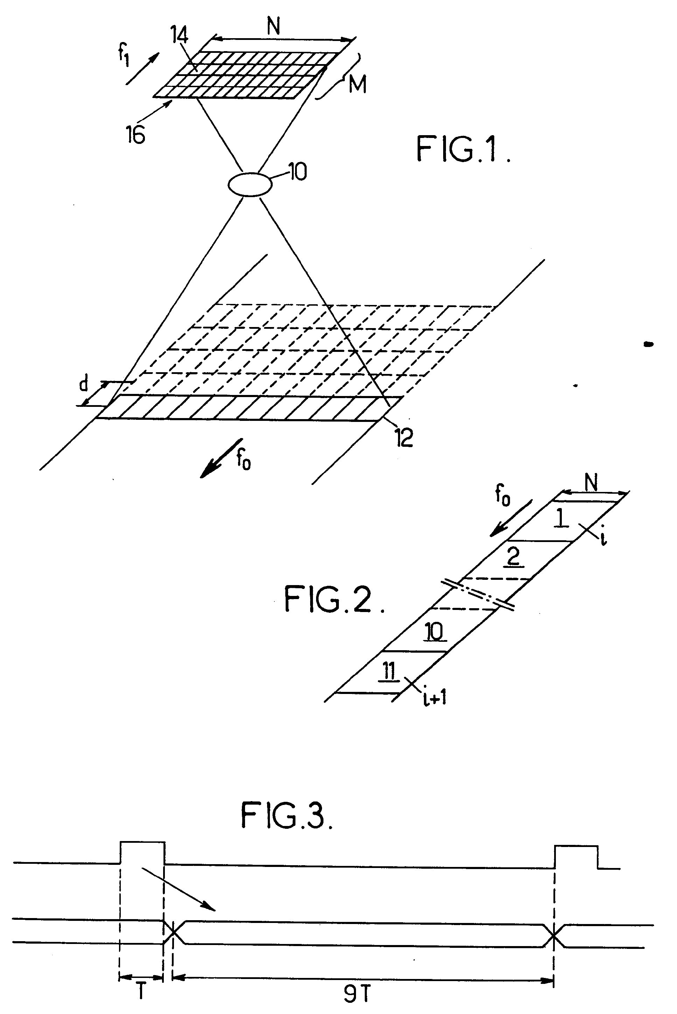

La figure 1 montre schématiquement le fonctionnement d'un tel dispositif, dit à intégration et report de charges. L'optique à grand champ 10 forme l'image d'une bande de terrain 12 sur une des lignes 14 de capteurs d'un réseau matriciel 16. Le déplacement du satellite dans la direction $f_0$ fait que l'image du champ 12 passe successivement d'une ligne à la suivante, dans la direction indiquée par la flèche $f_1$. Une électronique associée au dispositif permet de transférer les charges accumulées par les capteurs d'une ligne à la suivante à la cadence correspondant au pas d'échantillonnage $\underline{d}$ dans le sens $f_0$ du défilement, le pas étant lui-même lié à la distance entre lignes de la barrette 16, et au grossissement de l'optique.

On voit qu'une même ligne de la scène est analysée successivement par chacune des $\underline{M}$ lignes de capteurs de la barrette 16. Le décalage des charges suivant la flèche $f_1$ en synchronisme avec la vitesse de défilement de l'image dans le plan focal de l'optique résulte en un accroissement du signal finalement disponible.

Classiquement, les charges accumulées sont finalement transférées de la dernière ligne de la barrette dans un registre à décalage et ce dernier est lu en série pendant l'intervalle de temps qui sépare deux transferts. Dans le cas d'une utilisation sur satellite, les données analogiques de sortie sont numérisées en temps réel, dans un convertisseur puis mémorisées ou transmises.

Le débit de données en sortie du registre est très élevé lorsqu'on recherche une très haute résolution spatiale. Le débit de pixels en sortie du registre est égal à :

$$C.V/d^2$$

où C est la largeur du champ transversal, V est la vitesse de défilement au sol et $\underline{d}$ est le pas d'échantillonnage (supposé égal dans le sens du défilement et dans le sens transversal).

Le débit binaire de transmission vers le sol est le produit du débit de pixels par le nombre de bits par pixel.

Beaucoup d'applications de télédétection par satellite, ainsi qu'un certain nombre d'autres applications, ne nécessitent pas une couverture globale ininterrompue. Des prises de vues localisées sont suffisantes.

La première idée qui vient à l'esprit, lorsqu'il suffit de transmettre des images réparties à intervalles réguliers, est de placer une mémoire numérique vive en aval du convertisseur analogique-numérique et d'utiliser la totalité du temps disponible entre deux prises de vues pour la transmission. Mais la cadence des échantillons analogiques reste très élevée et nécessite de nombreuses chaînes de traitement à conversion analogique-numérique présentant une large bande passante, donc des circuits complexes et à forte dissipation de puissance.

La présente invention vise à fournir un dispositif de prise de vues du type ci-dessus défini, permettant de réduire notablement la complexité des systèmes placés en aval de la partie opto-électronique et applicable à la prise de vues localisées.

L'invention propose dans ce but un dispositif conforme à la revendication 1.

Grâce à cette disposition, la cadence de lecture du registre à décalage de sortie peut être très réduite par rapport à la cadence qui est nécessaire dans un dispositif de couverture ininterrompue.

L'invention vise également à augmenter le format des images fournies par un dispositif de prise de vues à défilement du type ci-dessus défini, au moins dans la direction du défilement du satellite, à résolution donnée.

La solution qui vient immédiatement à l'esprit pour étendre le format des images consiste à accroître la taille du détecteur. Mais des raisons technologiques s'y opposent. D'une part la dimension des tranches de semi-conducteur est limitée, ce qui limite à son tour la dimension du détecteur que l'on peut former sur la tranche. D'autre part la probabilité que le détecteur présente un défaut conduisant à l'écarter augmente de façon rédhibitoire avec la dimension.

On peut également envisager de disposer deux détecteurs bout à bout dans le plan focal. Dans la pratique, cette solution n'est pas acceptable, pour plusieurs raisons. Elle encombre le plan focal, ce qui est inacceptable pour certaines applications, notamment spatiale où la masse, l'autonomie et l'encombrement sont des considérations essentielles. De plus, il n'est pas possible d'accoler parfaitement deux détecteurs, la présence du registre de décalage de lecture et des électrodes de commande de la barrette constituant la zone image donnant naissance à une zone morte. Enfin, les optiques utilisées pour la prise de vue à défilement n'ont en général un champ étendu que selon la direction perpendiculaire au défilement, de sorte qu'il est essentiel que la barrette reste la plus proche possible d'une ligne transversale passant par l'axe optique.

L'invention utilise une approche du problème différente de celles antérieurement connues, reposant sur la séparation temporelle de l'image en deux sous-images pouvant avoir chacune le format d'une image habituelle, et cela en utilisant un diviseur d'image.

L'invention propose également la mise en oeuvre alternée de moyens optiques pour partager le flux lumineux reçu de l'optique en deux fractions correspondant à deux demi-vues successives dans le sens du défilement et pour diriger chaque fraction vers l'une de deux barrettes de capteurs et comportant des moyens de transfert de charges affectés chacun à une barrette et fonctionnant de façon alternée.

De façon plus précise, l'invention propose un dispositif du type ci-dessus défini comportant des moyens optiques, mécaniques et/ou électriques pour reconstituer une image complète à partir de la saisie alternée de deux fractions d'image ou sous-images dans le sens du défilement. Pour ce faire, le flux provenant de la scène observée est partagé, chaque fraction étant dirigée vers l'une des deux barrettes de capteurs ; les moyens de transfert de données affectés chacun à une barrette fonctionnent de façon alternée.

L'opération de raboutage peut être effectuée en utilisant un partage des flux par des moyens optiques travaillant soit en transmission soit en réflexion. Le choix entre les deux variantes sera fait en fonction des conditions particulières rencontrées. En particulier il sera préférable de travailler en réflexion lorsqu'il est essentiel d'éviter tout affaiblissement de flux lumineux.

L'invention présente un intérêt particulier dans le cas d'un dispositif de prise de vues dans des champs non jointifs du genre mentionné plus haut.

L'invention sera mieux comprise à la lecture de la description qui suit de modes particuliers de réalisation, donnés à titre d'exemples non limitatifs. La description se réfère aux dessins qui l'accompagnent, dans lesquels :

- la figure 1, déjà mentionnée, est un schéma de principe destiné à rappeler le principe de la prise de vues défilement du type en râteau ;
- la figure 2 est un schéma de principe destiné à montrer une répartition possible des champs dans le sens de défilement, en cas de mise en oeuvre d'un aspect de l'invention ;
- la figure 3 est un chronogramme montrant l'échelonnement de la prise d'images et de la transmission dans le cas d'une mise en oeuvre schématisée en figure 2 ;
- la figure 4 est un synoptique de principe d'un dispositif selon un mode particulier de réalisation de l'invention ;
- les figures 4A et 4B sont des schémas montrant la séquence de fonctionnement du dispositif de la figure 4 ;
- la figure 5 est un chronogramme de fonctionnement du détecteur de la figure 4 ;
- les figures 6A et 6B montrent la constitution de principe d'un dispositif de prise de vues selon un autre mode de réalisation mettant en oeuvre des détecteurs du type de celui de la figure 4 fonctionnant en rabouttage temporel de sous-images ;
- la figure 7 est un chronogramme montrant l'échelonnement des signaux dans un dispositif correspondant au schéma de la figure 6 ;
- les figures 8 et 9, respectivement similaires aux figures 6 et 7, correspondent à un autre mode de réalisation de l'invention ;
- la figure 10 est un schéma de principe d'une autre variante encore de réalisation, montrant comment quatre sous-images peuvent être assemblées transversalement et longitudinalement par des moyens optiques.

L'invention sera décrite dans son application à la prise de vues terrestres à défilement, à partir d'un satellite en orbite basse, à l'aide d'un détecteur à intégration et report de charges, c'est-à-dire fonctionnant comme indiqué sur la figure 1. Elle serait cependant applicable à d'autres types de prise de vues, et notamment à des prises de vues dans lesquelles le défilement est obtenu à l'aide d'un miroir de balayage.

Comme cela a déjà été indiqué, il suffit souvent de disposer d'images de N x P pixels non jointives, séparées d'un nombre minimum de formats d'image, par exemple d'au moins neuf formats d'image, comme indiqué sur la figure 2.

L'invention permet dans ce cas de réduire dans le rapport 9/1 la cadence de transmission nécessaire à partir du détecteur. La ligne inférieure de la figure 3 montre la durée 9T disponible pour transmettre les pixels d'une image acquise pendant la durée T (ligne supérieure).

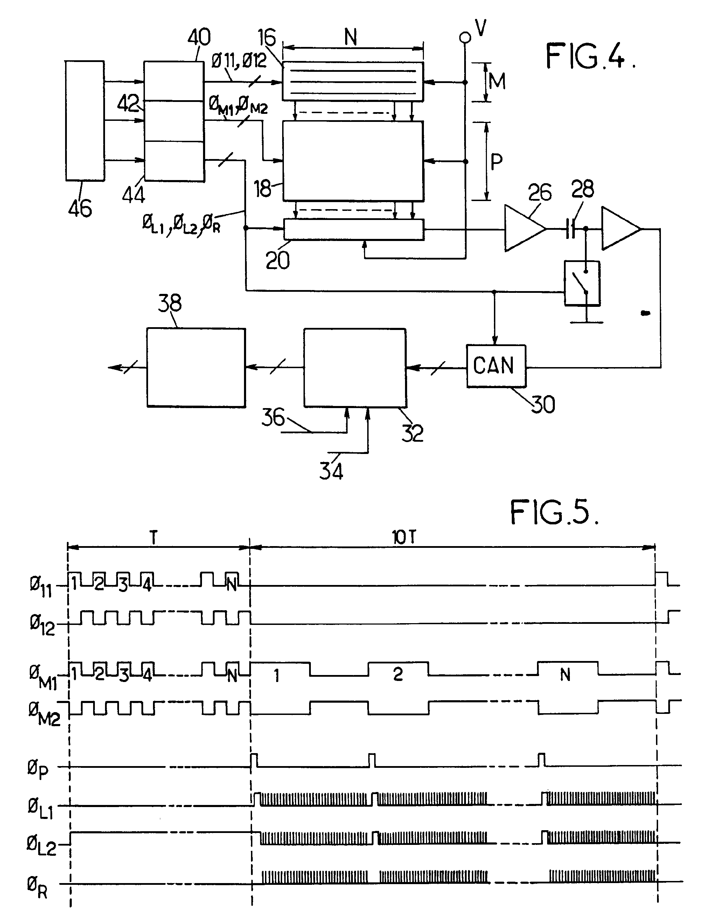

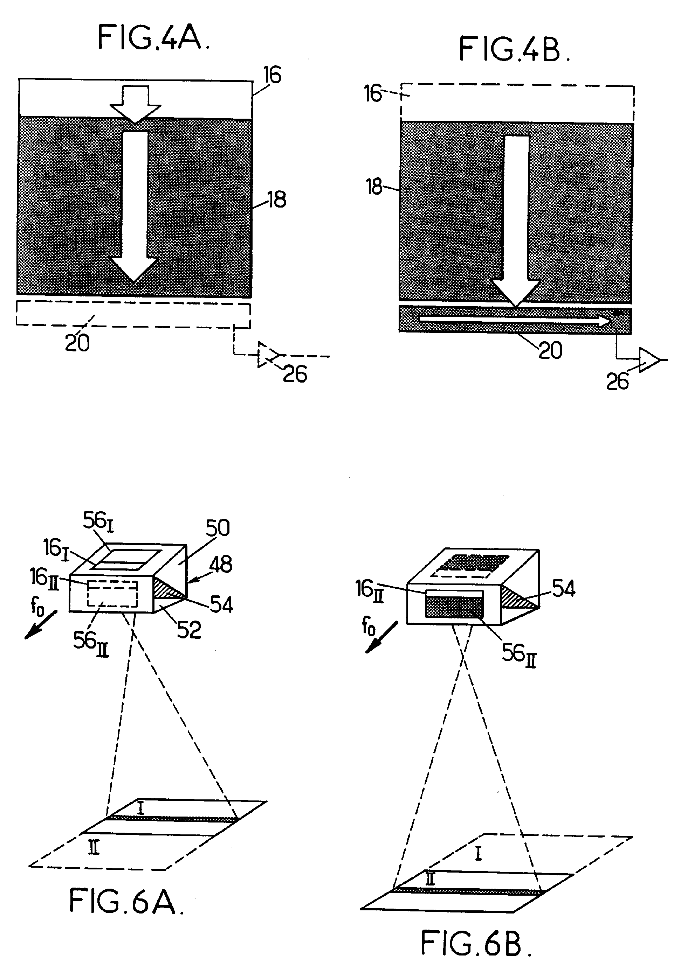

Le dispositif peut avoir la constitution montrée en figure 4. Le détecteur comporte, de façon classique, une barrette 16 constituant zone image, à M lignes de N capteurs. Le nombre de lignes ne dépasse pas 64 en général. On supposera dans ce qui suit que le détecteur comporte M = 4 lignes.

Le détecteur comporte également une zone mémoire 18 à P lignes de N sites, de même constitution que les capteurs, mais "aveugle" c'est-à-dire à l'abri de la lumière. Le nombre de lignes P est choisi en fonction de la taille de l'image à obtenir, dans le sens du défilement.

Enfin le détecteur comporte une zone de lecture, constituée par un registre à décalage 20 dont la sortie est reliée à une voie de lecture. Cette voie comprend un préamplificateur 26, des moyens 28 d'échantillonnage et un convertisseur analogique-numérique 30 qui quantifie les tensions de sortie provenant chacune d'un site photosensible, avec une résolution suffisante pour permettre le traitement ultérieur. Les mots de sortie, représentant chacun un pixel d'image, sont inscrits dans une mémoire vive 32 pouvant être commandée en écriture par une entrée 34 et en lecture par une entrée 36. La mémoire 32 peut être suivie d'un circuit de traitement 38 ou reliée directement à un modulateur d'émission. Etant donné que la zone mémoire joue elle-même un rôle de tampon, la mémoire 32 peut être réduite à quelques lignes seulement, pour permettre le fonctionnement correct des circuits de traitement.

Le dispositif comporte également des moyens de cadencement qui seront décrits plus loin et le font fonctionner par cycles de deux phases successives :

- Au cours d'une phase de détection et de stockage (figure 4A), les charges générées par illumination sont intégrées et sommées de façon cohérente le long de chacune des N colonnes de la barrette et transférées vers la zone mémoire 18 en synchronisme avec le défilement de la scène. Si la zone image ne comporte qu'une ligne de capteurs, il n'y a pas de sommation.

  Pendant cette phase, les zones image 16 et mémoire 18 sont commandées de façon synchrone. Les charges créées dans la zone image sont transférées dans la zone mémoire au fur et à mesure de leur accumulation. Le registre de lecture 20 n'est pas utilisé. La phase de détection et de stockage cesse lorsque la zone mémoire a reçu le contenu des pixels correspondant à ses P lignes, ou éventuellement à un nombre inférieur lorsque l'image à acquérir a une longueur inférieure au maximum possible.

- Au cours d'une phase de lecture (figure 4B), l'intégration et le transfert des charges vers la zone mémoire sont interrompus. Seuls la zone mémoire et le registre de lecture sont mis en oeuvre. Les charges contenues dans les sites de la zone mémoire sont transférées, ligne par ligne, vers le registre de lecture 20 à partir duquel elles sont lues en série. L'opération de lecture peut être répartie sur toute la durée 9T, T étant la durée de la phase de détection.

Pour réaliser ces phases de fonctionnement, chaque zone 16, 18 et 20 comporte son propre séquenceur 40, 42 ou 44. L'horloge fournie par le séquenceur 42 dépend de la phase de fonctionnement. Les fréquences d'horloge sont commandées, ainsi que la répartition des phases opératoires, par une électronique de commande 46.

Le dispositif est complété par des circuits de polarisation, fournissant les tensions nécessaires aux trois zones, indiquées par V.

La figure 5 montre à titre d'exemple, un chronogramme représentatif du séquencement. Les signaux sont identifiés sur chaque ligne de la figure 5 par des lettres indiquées sur la figure 4 aux emplacements où ils apparaissent. Pour simplifier la représentation, on a décrit un système fonctionnant en biphase ; mais le principe s'applique évidemment quel que soit le nombre de phases. On a désigné par :

- $\phi_{I1}$ et $\phi_{I2}$ les signaux d'horloge biphasé de fonctionnement de la zone d'images, les signaux d'horloge étant au niveau O en dehors des périodes de prise d'images de durée T;
- $\phi_{M1}$ et $\phi_{M2}$ les signaux appliqués à la zone mémoire, à deux fréquences différentes pendant la phase de détection et pendant la phase de lecture ;
- $\phi_P$ la phase de transfert-ligne de la zone mémoire vers le registre de lecture ;
- $\phi_{L1}$, $\phi_{L2}$ et $\phi_R$ les signaux de transfert-série et de remise à zéro appliqués au registre à décalage, encore avec un fonctionnement biphase.

La rétention des charges dans la zone mémoire 18 peut atteindre plusieurs secondes dans certains cas. Pour éviter que les charges d'origine thermique dans les sites, lorsqu'il s'agit d'une matrice à couplage de charges, ne dégradent la performance, la matrice peut être refroidie, à une température de -20°C.

Que le dispositif soit prévu pour fournir des images non jointives, avec une zone mémoire constituant tampon, ou qu'il fonctionne de façon classique, la taille des images élémentaires est limitée par celle des tranches. Le dispositif montré en figure 6 de façon schématique permet, par partage du flux lumineux reçu de l'optique en deux fractions correspondant à deux demi-vues successives dans le sens du défilement, d'augmenter la taille des images élémentaires.

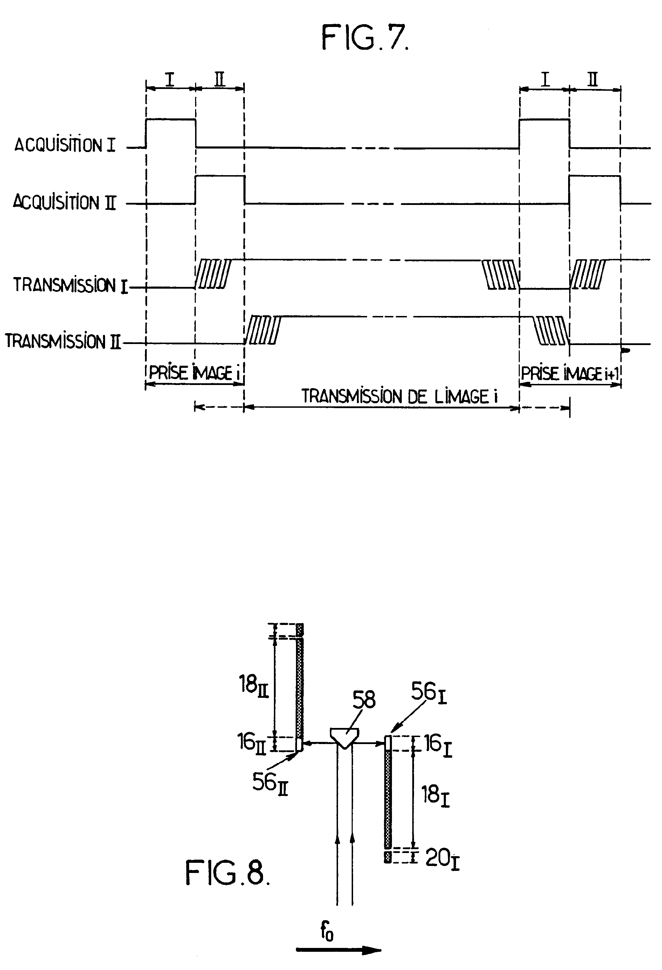

Le diviseur d'image 48, dont les figures 6A et 6B montrent schématiquement les deux phases de fonctionnement en alternance, travaille en transmission. Il peut être constitué par deux prismes de verre 50 et 52, présentant chacun une section en forme de triangle rectangle isocèle, collés par leurs faces hypoténuses, l'une étant recouverte d'un dépôt semi-réfléchissant 54. Sur chacune des deux faces de sortie du diviseur 48 est fixé un détecteur $56_I$ ou $56_{II}$. Les zones images $16_I$ et $16_{II}$ des détecteurs sont centrées sur l'axe optique et conjuguées optiquement de façon à voir la même scène au même moment. Aux détecteurs $56_I$ et $56_{II}$ sont associés des séquenceurs du genre montré en figure 4, mais fonctionnant avec un décalage temporel, comme le montre la figure 7.

Au cours des périodes I (figure 6A), les zones image et mémoire du détecteur $56_I$ détectent et stockent la sous-image I. Pendant cette période de fonctionnement, le détecteur $56_{II}$ est inactif ou en cours de lecture d'une sous-image précédente.

Au cours des périodes II (figure 6B), les zones image et mémoire du détecteur $56_{II}$ effectuent la détection et le stockage de la sous-image II : pendant cette période, le détecteur $56_I$ retient ou transmet les données de la sous-image I.

Après la fin de la période II, les données relatives à la sous-image II peuvent être lues à leur tour. Cette lecture se termine avant la fin de la période I suivante.

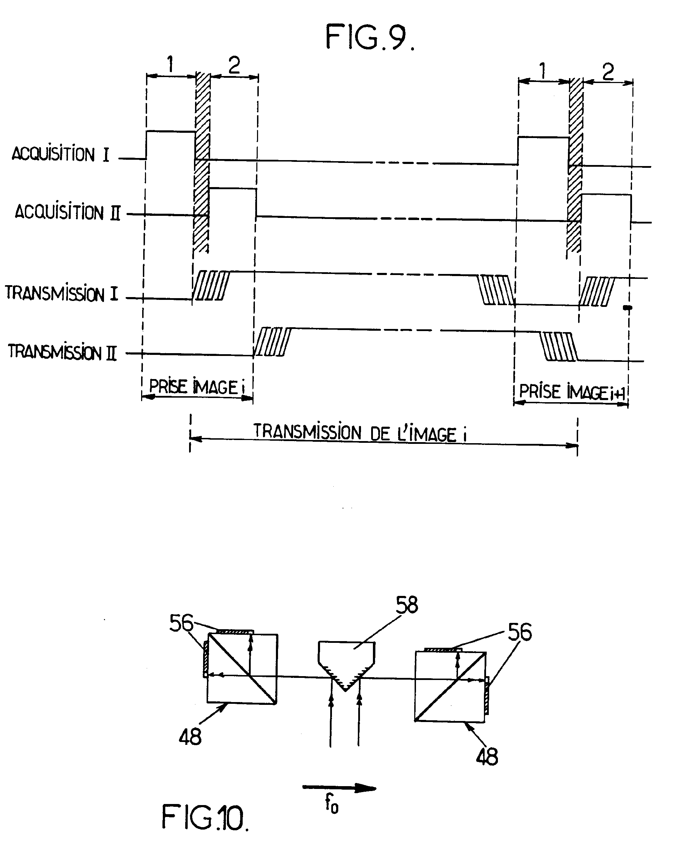

Le mode de réalisation qui vient d'être décrit est de mise en oeuvre très simple. Mais dans certains cas, la division du flux lumineux n'est pas acceptable du fait que l'illumination est faible. Dans ce cas il est possible d'utiliser le mode de réalisation montré en figure 8, utilisant un diviseur fonctionnant en réflexion. Sur la figure 8, les éléments correspondant à ceux de la figure 6 sont désignés par les mêmes numéros de référence. Un diviseur 58 à deux miroirs orthogonaux sépare le champ en deux demi-images qui sont reçues par les zones images $16_I$ et $16_{II}$ de deux détecteurs $56_I$ et $56_{II}$. Du fait de la séparation spatiale liée au principe de division par miroirs, le séquencement est prévu pour éliminer toute zone morte au milieu de l'image. Le chronogramme de fonctionnement est alors celui donné en figure 9.

Dans ce cas, les deux détecteurs $56_I$ et $56_{II}$ sont montés tête-bêche.

Il est possible, en combinant les réalisations montrées en figures 6 et 8, de constituer une image de format doublé en largeur et en longueur par rabouttages latéral et longitudinal. Dans le cas montré en figure 10, ce résultat est atteint en utilisant un séparateur 58 fonctionnant en réflexion pour effectuer un raboutage le long du défilement $f_0$ et de deux séparateurs en transmission 48 permettant de rabouter deux demi-images dans la direction normale au sens de défilement $f_0$, à l'aide de quatre détecteurs 56.

## Revendications

1. Dispositif de prise de vues à défilement comprenant une optique (10) formant simultanément l'image des points de toute une ligne orthogonale à la direction du défilement sur un détecteur ayant une barrette (16) de capteurs opto-électroniques placée dans le plan focal de l'optique et des moyens pour transférer les données de tous les capteurs de la barrette simultanément, à une fréquence déterminée par le pas d'échantillonnage choisi dans le sens du défilement et par la vitesse du défilement, caractérisé en ce que le détecteur comporte, en plus de la barrette (16) à $\underline{M}$ lignes de $\underline{N}$ capteurs, M étant un entier supérieur à 1, une zone mémoire de $\underline{P}$ lignes de $\underline{N}$ sites, P étant au moins dix fois supérieur à M et de préférence au moins cent fois supérieur, et des moyens de cadencement pour, en alternance, transférer les charges de ladite barrette (16) à la zone mémoire (18), jusqu'à remplissage au moins partiel de cette dernière et transférer chaque ligne à son tour de la zone mémoire (18) vers un registre à décalage de lecture (20), à une cadence très inférieure à la cadence à laquelle les charges sont transférées de la barrette (16) vers la zone mémoire (18) pendant des intervalles de temps séparés les uns des autres de la durée nécessaire aux transferts de la zone mémoire vers le registre à décalage, et uniquement pendant ces intervalles.

2. Dispositif selon la revendication 1, caractérisé en ce que la cadence de transfert d'une ligne à l'autre de la barrette et de la barrette à la zone mémoire est choisie pour correspondre à la vitesse de défilement de la scène sur les lignés successives.

3. Dispositif selon la revendication 1, ou 2, caractérisé par la mise en oeuvre alternée de moyens optiques (48,58) pour partager le flux lumineux reçu de l'optique en deux fractions correspondant à deux demi-vues successives dans le sens du défilement et pour diriger chaque fraction vers l'une de deux barrettes de capteurs ($56_I,56_{II}$) et comportant des moyens de transfert de charges affectés chacun à une barrette et fonctionnant de façon alternée.

4. Dispositif selon la revendication 3, caractérisé en ce que lesdits moyens optiques (48) travaillent en transmission pour envoyer la moitié du flux lumineux à l'un des capteurs et l'autre moitié à l'autre.

5. Dispositif selon la revendication 3, caractérisé en ce que les moyens optiques travaillent en réflexion pour séparer le champ en deux portions adressées chacune à l'un des détecteurs.

6. Dispositif selon la revendication 3, 4 ou 5, caractérisé en ce que les moyens optiques travaillent en transmission et réflexion pour reconstituer une image dans les deux dimensions.

## Patentansprüche

1. Laufende opto-elektronische Bildaufnahmevorrichtung mit einer Optik (10), die gleichzeitig das Bild der Punkte einer ganzen Linie rechtwinklig zur Laufrichtung auf einem Detektor bildet, der einen Bügel (16) von opto-elektronischen Sensoren aufweist, die in der Brennpunktebene der Optik angeordnet sind, und mit Mitteln zur gleichzeitigen Übertragung der Daten aller Sensoren des Bügels mit einer Frequenz, die durch den in Laufrichtung ausgewählten Probeschritt und durch die Laufgeschwindigkeit bestimmt wird, dadurch gekennzeichnet, daß der Detektor zusätzlich zum Bügel (16) mit $\underline{M}$ Zeilen von N-Sensoren, wobei M ein ganzzahliges Vielfaches von 1 ist, eine Speicherzone von B-Linien von $\underline{N}$ Orten, wobei P wenigstens 10 mal größer als M und vorzugsweise wenigstens 100 mal größer als M ist, und Kadenzmittel aufweist zum alternierenden Übertragen der Ladungen des Bügels (16) zu der Speicherzone bis zu einer Auffüllung wenigstens teilweise dieser letzten und zum Übertragen jeder Linie auf ihrem Weg durch die Speicherzone (18) zu einem Leseverschieberegister (20) mit einer Kadenz sehr viel geringer als die Kadenz, mit der die Ladungen des Bügels (16) zur Speicherzone (18) während Zeitintervallen übertragen werden, die gegenseitig durch die für die Übertragung der Speicherzone zum Verschieberegister notwendige Zeitdauer getrennt sind, und zwar nur während dieser Intervalle.

2.  Vorrichtung nach Anspruch 1,
    dadurch gekennzeichnet,
    daß die Übertragungskadenz einer Linie zur anderen des Bügels und des Bügels zur Speicherzone derart ausgewählt ist, um mit der Laufgeschwindigkeit des Bildes auf den aufeinanderfolgenden Zeilen übereinzustimmen.

3.  Vorrichtung nach Anspruch 1 oder 2,
    gekennzeichnet durch
    die abwechselnde Verwendung von optischen Mitteln (48,58) zum Teilen des von der Optik empfangenen Lichtflusses in zwei Fraktionen, die zwei aufeinanderfolgenden Halbansichten im Sinne der Laufrichtung entsprechen, und zum Richten jeder Fraktion gegen eine der beiden Sensorbügel (56$_I$, 56$_{II}$), wobei die Vorrichtung Mittel zur Übertragung von Ladungen aufweist, die jeweils auf einen Bügel wirken und abwechselnd arbeiten.

4.  Vorrichtung nach Anspruch 3,
    dadurch gekennzeichnet,
    daß die optischen Mittel (48) in Übertragung zum Senden der Hälfte des Lichtflusses zu dem einen der Sensoren und der anderen Hälfte zu dem anderen Sensor arbeiten.

5.  Vorrichtung nach Anspruch 3,
    dadurch gekennzeichnet,

daß die optischen Mittel in Reflektion arbeiten, um das Feld in zwei Bereiche zu trennen, welche jeweils zu einem der Detektoren gerichtet sind.

6.  Vorrichtung nach Anspruch 3, 4 oder 5,
    dadurch gekennzeichnet,
    daß die optischen Mittel in Übertragung und Reflektion zur Wiederherstellung eines Bildes in den beiden Dimensionen arbeiten.

## Claims

1.  Moving device for taking shots, comprising an optical device (10) simultaneously forming the image of the points of an entire line at right-angles to the direction of movement on a detector having a block (16) of opto-electronic sensors which is arranged in the focal plane of the optical device, and means for transferring the data from all the sensors of the block simultaneously, at a frequency determined by the selected sampling step in the direction of movement and by the speed of movement, characterised in that, in addition to the block (16) having $\underline{M}$ lines of $\underline{N}$ sensors, M being an integer greater than 1, the detector comprises a memory area of $\underline{P}$ lines of $\underline{N}$ sites, P being at least ten times greater than $\overline{M}$ and preferably at least one hundred times greater, and speed-setting means for, in alternation, transferring the charges from the said block (16) to the memory area (18) until the latter is at least partially filled and transferring each line in its turn from the memory area (18) to a reading shift register (20), at a rate much lower than the rate at which the charges are transferred from the block (16) to the memory area (18) during time intervals separated from one another by the period necessary for the transfers from the memory area to the shift register, and only during those intervals.

2.  Device according to Claim 1,
    characterised in that the rate of transfer from one line to the other of the block and from the block to the memory area is selected to correspond to the speed of movement of the scene on the successive lines.

3.  Device according to Claim 1 or 2,
    characterised by the alternate use of optical means (48, 58) for dividing the luminous flux received from the optical device into two fractions corresponding to two successive half-shots in the direction of movement and for directing each fraction to one of two blocks of sensors (56$_I$, 56$_{II}$) and comprising charge-transfer means which are each associated with a block and operate in alternating manner.

4.  Device according to Claim 3,
    characterised in that the said optical means (48)
    have a transmitting function in order to send half
    of the luminous flux to one of the sensors and the
    other half to the other.

5.  Device according to Claim 3,
    characterised in that the optical means have a reflecting function in order to separate the field into
    two portions which are each addressed to one of
    the detectors.

6.  Device according to Claim 3, 4 or 5,
    characterised in that the optical means have a
    transmitting and reflecting function in order to reconstitute a two-dimensional image.

FIG.1.

FIG.2.

FIG.3.

FIG.4.

FIG.5.

# FIG.4A.

# FIG.4B.

# FIG.6A.

# FIG.6B.

## FIG.7.

## FIG.8.

# FIG.9.

ACQUISITION I

ACQUISITION II

TRANSMISSION I

TRANSMISSION II

PRISE IMAGE i

PRISE IMAGE i+1

TRANSMISSION DE L'IMAGE i

FIG.10.

$f_0$